# EUROPEAN PATENT APPLICATION

(11) **EP 4 553 694 A1**
(43) Date of publication of application: **14.05.2025**
(21) Application number: 23208572.0
(22) Date of filing: 08.11.2023
(51) Int. Cl.: G06F 30/27, G06F 111/12, G06F 113/14

(54) **AUTOMATIC MAPPING OF EXTRACTED DRAWING INFORMATION**

(71) Applicant: Siemens Aktiengesellschaft, 80333 München (DE)
(72) Inventor: Ganesh, Gautam, 560030 Bangalore (IN); Joshi, Janaki, 85591 Vaterstetten (DE); Koleva, Aneta, 81373 München (DE); Ringsquandl, Martin, 83064 Raubling (DE)
(74) Representative: Siemens Patent Attorneys

(57) **Abstract**

Semantic digital twins of process plants shall be created faster on the basis of piping and instrumentation diagrams. Therefore, there is provided a method of mapping drawing information representing a design of a process plant to an industrial standard including the steps of automatically extracting (13) the drawing information from a drawing (12) representing the process plant, automatically mapping (17) the drawing information to classes (25, 28) of the industrial standard by using a named entity recognition model and generating an instance of the class of the industrial standard the drawing information is mapped to.

## Description

The present invention relates to a method of mapping drawing information representing a design of a process plant to an industrial standard. Furthermore, the present invention relates to a corresponding device for mapping drawing information. Additionally, the present invention relates to a respective computer program.

Piping and instrumentation diagrams (P&IDs) represent the basic design of a process plant and provide an overview of the interconnections between the process equipment, instrumentation, and flow of fluids. These documents are often available as CAD drawings or scanned PDF diagrams. Extracting the information from such diagrams consists of several automated steps. However, the extracted information by itself doesn't represent any semantic meaning, therefore mapping this information to an industrial standard is a critical step needed to construct a true and consistent digital twin of the process plant. This final step requires involvement of one or several domain experts who have knowledge of the P&ID domain and the target standard for specifying the mappings correctly. Hence, a lot of manual work and long hours are spent on this final mapping step.

DEXPI (Data Exchange in Process Industry) is a commonly used standard for representation of P&ID information. It provides uniform description of the P&ID components and provides vendor-independent vocabulary for exchange of information. Using the semantic model of DEXPI as a backbone for integrating data from P&ID, ensures semantically consistent representation of information. Moreover, since the DEXPI model is available in rdf (or owl) syntax, one can extract a knowledge graph representation for a P&ID which will then enable the engineers to perform analytics on top of the standardized P&ID data much faster.

With the fast development of algorithms for object detection, several deep learning solutions have been proposed for automated information extraction from P&IDs. Two of these articles are:
Byung Chul Kim, Hyungki Kim, Yoochan Moon, Gwang Lee, Duhwan Mun, End-to-end digitization of image format piping and instrumentation diagrams at an industrially applicable level, Journal of Computational Design and Engineering, Volume 9, Issue 4, August 2022, Pages 1298-1326, and
Seppo Sierla, Mohammad Azangoo, Kari Rainio, Nikolaos Papakonstantinou, Alexander Fay, Petri Honkamaa, Valeriy Vyatkin, Roadmap to semi-automatic generation of digital twins for brownfield process plants, Journal of Industrial Information Integration, Volume 27, 2022,
In these solutions various object detection methods are used for the detection of symbols in image representations of P&IDs. Similarly, for text recognition, deep learning methods specific for text detection are used. It is possible to use deep learning methods for the steps of information extraction thanks to the existing large, labeled datasets.

However, after information has been extracted and preprocessed, the step of semantically enriching the extracted information is done manually and with the involvement of domain experts. The extracted information needs to be labeled, and additionally attributes related to the elements of the P&IDs have to be identified. For this step, currently there is no labeled data and therefore this is a manual step. The alignment of the extracted data to existing concepts in DEXPI has been done manually (compare B. C. Kim).

With the widespread use of DEXPI, the importance of aligning the P&ID data to this standard and exploiting the graph representation of a P&ID has been recognized (compare Jonas Oeing, Wolfgang Welscher, Niclas Krink, Lars Jansen, Fabian Henke, Norbert Kockmann, Using artificial intelligence to support the drawing of piping and instrumentation diagrams using DEXPI standard, Digital Chemical Engineering, Volume 4, 2022, 100038, ISSN 2772-5081, https://doi.org/10.1016/j.dche.2022.100038). However, in this recent work, the authors already assume that the P&ID information has been exported to a DEXPI format and only focus on applying graph theory methods for analyzing the exported data.

The object of the present invention is to fasten the process of aligning drawing data to an industrial standard.

According to the present invention this object is solved by a method and a device as suggested by the independent claims. Further preferable developments are defined in the subclaims.

In other words, there is provided a method of mapping drawing information representing a design of a process plant to an industrial standard. This means that a drawing information like "piping and instrumentation diagrams" (P&IDs) are available for a specific process plant. A process plant can take different forms depending on the industry in which it is used. A process plant in the food industry could be a canned food production plant. This plant would process raw materials such as fruits or vegetables to produce shelf-stable products. The plant would include slices, boilers, filling machines and packaging machines, for instance. In chemical industries a processing plant could be used for producing plastics. This plant would process raw materials such as petroleum or natural gas to produce plastics. The plant would include extruders, mixing machines, molding presses and cooling equipment, for instance. Process plants are also used for metal processing or in the textile industry etc. The plants each have individual devices specific to the industry.

The design of the process plant represents the effect structure of the industrial plant.

In a first step of the inventive method, the drawing information is automatically extracted from a drawing representing the process plant. For example, there is a CAD drawing showing the effect structure of the process plant. The drawing information of the CAD drawing may be extracted by a suitable algorithm.

In a further step, the drawing information is automatically mapped to classes of the industrial standard by using a named entity recognition model. The "named entity recognition" (NER) is a task of "natural language processing" (NLP) that involves identifying and classifying named entities in a text into predefined categories such as person names, organizations, locations and others. The goal of NER is to extract structured information from unstructured text data and represent it in a machine readable format. Any appropriate algorithm for named entity recognition can be used for mapping the drawing information to categories or classes of the industrial standard.

Furthermore, the inventive method includes the step of generating an instance of the class of the industrial standard the drawing information is mapped to. This means that a component is generated in conformity with the industrial standard, wherein the component corresponds to the drawing information extracted from the drawing or diagram.

Thus, there may be provided a method for automatic mapping and aligning the data extracted from P&ID to the existing industrial standard (e.g. DEXPI). Mapping the data to a standard can significantly reduce the time needed for development of new process plants, as well as provide consistency, reusability, and interoperable digital twins of the P&IDs.

According to a specific embodiment, the drawing is a piping and instrumentation diagram. Such diagrams are used to represent the design of a plant or the like. The piping represents the connections between the devices. The piping may include symbols for liquid pipes, electrical connections etc. The instrumentation may include devices, process components etc. The piping and instrumentation diagram may be provided as PDF or CAD drawing etc. Thus, no specific format of the diagram is required.

According to another embodiment, the industrial standard is the Data Exchange in Process Industry (DEXPI) standard. The DEXPI standard is a commonly used standard for representing process plants. Such standard ensures standardization of dimensions, types, procedures and other criteria to create common parameters.

In another embodiment, the step of automatically extracting the drawing information includes symbol detection and/or line detection and/or text extraction. Usually, the diagrams representing the process plant include symbols, lines and text. Therefore, when extracting the total information from the diagram, it may be necessary to recognize the symbols, the lines and the text. In some embodiments it may be sufficient to detect one or two of these components. In other embodiments it may be necessary to detect all three components in order to extract the complete drawing information.

According to a further embodiment, the named entity recognition model is pre-trained with concepts of the industrial standard. The recognition quality of the model depends on its decision functions. The model may be based on artificial intelligence. Specifically, neural networks may be used. In such a case, the model should be pre-trained with mapping results of the specific standard used in the individual technical field. Thus, the mapping result will reach high quality earlier.

According to a further embodiment, the named entity recognition model uses a large language model for text extraction. Typically, the piping and instrumentation diagrams or drawings include words in a semantic context. Therefore, it is favorable to use a large language model which is specifically trained for text extraction. Thus, the text extraction achieves high quality.

In another embodiment, a knowledge graph including the generated instance of the class is provided. This means that a knowledge graph is built with the generated instance and other instances obtained from the diagram, if available. The knowledge graph is a semantic network representing the network of entities of the process plant shown in the diagram or drawing. Thus, the network can be visualized as graph structure.

In a specific embodiment, a digital twin of the process plant is provided on the basis of the knowledge graph. The digital twin is an up-to-date image of the actual plant in operation including plant condition and relevant historical data. If the DEXPI standard is used for representing the piping and instrumentation diagrams, the digital twin can be created more reliably.

In still another embodiment, after the step of automatically extracting the drawing information, the extracted drawing information is subjected to text cleaning, tokenizing, word embedding and/or positional embedding. For instance, the raw information of the extracting step includes an underscore between two words. In this case, the text may be cleaned by removing the underscore. In another example, two words are written together as one expression. In this case, the words have to be tokenized. Tokenizing may also be necessary for dividing an accumulation of symbols. Furthermore, word embedding may be performed. The word embedding is a representation of a word. Typically, the representation is a real valued vector that encodes the meaning of the word in such a way that words that are closer in the vector space are expected to be similar in meaning. Similarly, the positional embedding, i.e., the position of the word within a phrase or sentence, may be used for assigning semantic meaning to a word.

According to the present invention, there may also be provided a method of controlling a process plant by providing a digital twin as mentioned above, wherein the process plant is controlled by running the digital twin at least partly in parallel to the process plant. Under certain circumstances, the digital twin can also run with a time delay. The digital twin enables the supervision of the real plant.

The above object is also solved by a device for mapping drawing information representing a design of a process plant to an industrial standard, including:
- extraction means designed for automatically extracting the drawing information from a drawing representing the process plant,
- mapping means designed for mapping the drawing information to classes of (an ontology of) the industrial standard by using a named entity recognition model and
- generating means designed for generating an instance of the class of the industrial standard the drawing information is mapped to.

The extraction means may include a processor for image recognition. The extraction means may also include a memory for storing the input drawing and the output drawing information. Furthermore, the mapping means may be realized as computer similar to the extraction means. It may include a processor and a memory. Also the generating means can be realized as a computer having a respective input and output interface. Thus, the complete device can be realized as one computer.

Furthermore, there may be provided a system including a process plant and a device as described above, wherein controlling means of the process plant is designed for controlling the process plant by running a digital twin based on the generated instance at least partly in parallel to the process plant. This means that the system comprises the real plant and the corresponding digital twin. Both units run in parallel so that the real plant can be supervised with the output of the digital twin.

Furthermore, there may be provided a computer program including commands, which, when executed on a device described above, cause the device to carry out the method described above.

For use cases or use situations which may arise in the method and which are not explicitly described here, it may be provided that, in accordance with the method, an error message and/or a prompt for user feedback is output and/or a default setting and/or a predetermined initial state is set.

Independent of the grammatical term usage, individuals with male, female or other gender identities are included within the term.

The present invention will now be described in connection with the attached drawings showing in:
FIG 1 an exemplary output from an object recognition step;
FIG 2 an exemplary output from a text recognition step;
FIG 3 a schematic block diagram of the steps of a method according to an embodiment of the present invention;
FIG 4 a P&ID element;
FIG 5 DEXPI concepts described tagged plant items; and
FIG 6 the P&ID information of the butterfly valve of FIG 4 and the transformed DEXPI information.

The following examples represent advantageous embodiments of the present invention.

The process of information extraction from P&IDs (the expression "P&ID" is used representatively for all appropriate drawings and drawing formats) includes two main steps:
a) Using object recognition methods for symbol and line detection
b) Using text recognition methods for text extraction.

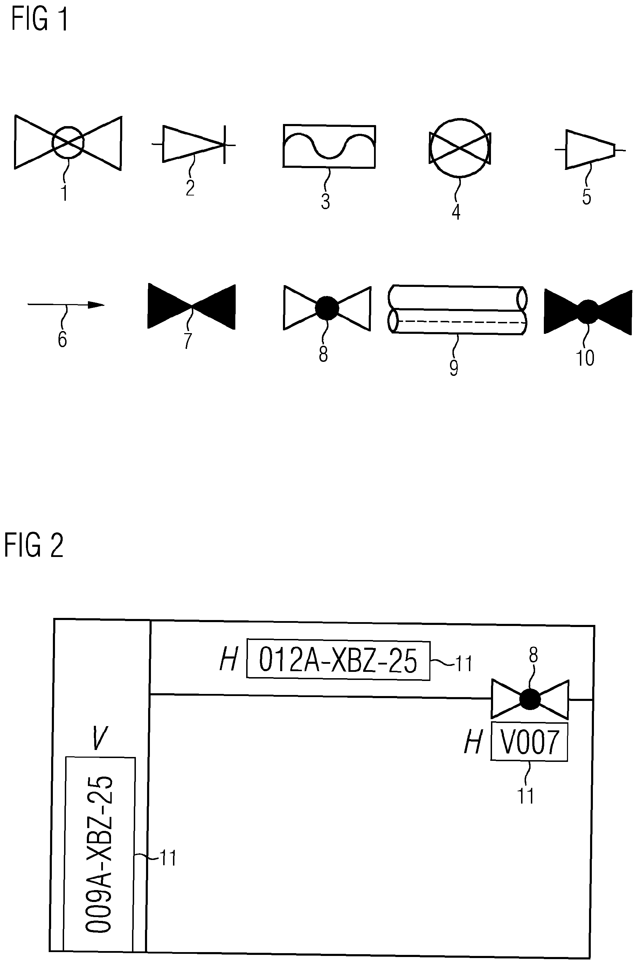

Exemplary output from the first step is shown in FIG 1. Recognized symbols from the input P&ID are highlighted with a bounding box and a label. Symbol 1 represents a ball valve, symbol 2 a check valve, symbol 3 a chemical seal, symbol 4 a circle valve, symbol 5 a concentric, symbol 6 a flood connection, symbol 7 a gate valve, symbol 8 a glove valve, symbol 9 an insulation and symbol 10 a globe valve nc.

However, it is often the case that the labels of the symbols are also joined with surrounding text such as: TOB/Butterfly Valve, instead of Butterfly Valve or ball_valve(BL-V) as used in industrial standards. This text has to be automatically recognized in order to gain semantic information.

The output from the text recognition is shown in FIG 2. It highlights the recognized text and its position with a bounding box 11. In the final step, the information from the symbol and text recognition is mapped to the DEXPI standard used for representing P&IDs.

The technical challenge is to align the labels for the symbols and the extracted text to the existing concepts from an ontology. Using only string recognition methods and handwritten rules will fail to deal with homonyms such as capacitor - capacitance. Moreover, since this step requires human involvement, it is error prone and extremely time consuming.

This invention aims to help the engineers when mapping extracted P&ID information to the ontology, by using a model for automatic named entity recognition (NER) of the extracted information and predicting the correct concept from the ontology. With this, a faster method for generating instance data is available, hence automating the step of building a knowledge graph (KG) representation of a P&ID.

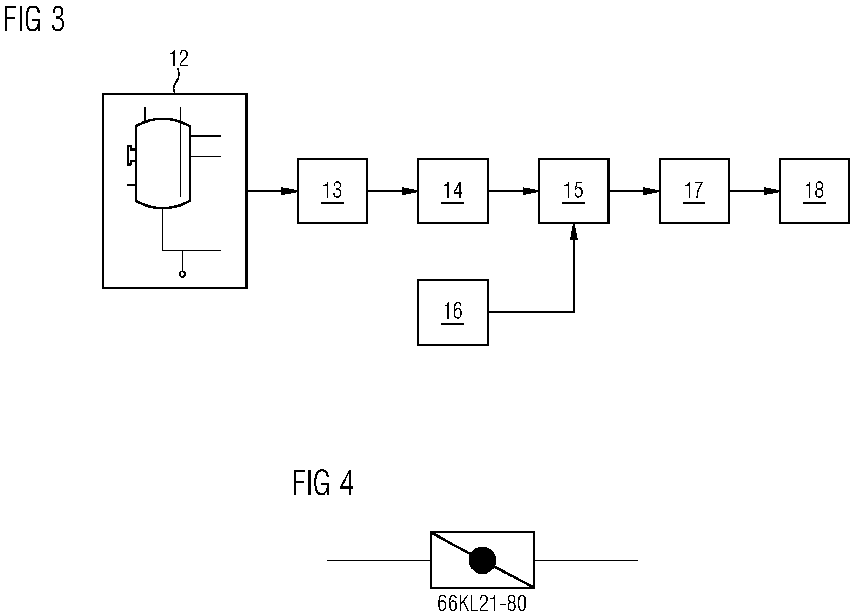

The end-to-end process of representing information from P&ID as a knowledge graph (KG) which is aligned to the concepts in the DEXPI standard is shown in FIG 3. This process requires the following steps:
a) Using object and/or text recognition and/or line recognition methods as processing step 13 for extracting information from P&ID, e.g. a PDF/CAD representation of P&ID 12.
b) Post-processing 14 of the extracted information. This step may include text cleaning, tokenizing, word embedding and positional embedding.
c) learning NER 15 (named entity recognition) using e.g. LLM (large language model) - for predicting entity type for the extracted information. The NER model may be pre-trained by DEXPI concepts 16.
d) Mapping 17 the extracted information to DEXPI concepts (applying NER).
e) Generating instance data 18.

The technical features of these steps are explained in detail in the next subsections.

### a) Processing step 13

In this step, the models for object and text recognition are applied and labels for symbols and text together with coordinates for bounding boxes are extracted. FIG 4 shows an example of a P&ID element 12. From the extraction or processing step 13 (object and text recognition), the relevant concepts are for symbol the label (in this case "Butterfly_Valve_70"), and for the text the value (in this example "66KL21-80").

### b) Post-processing step 14

During this step 14, first the extracted information may be cleaned and/or parsed. Then it may be tokenized, using a domain adapted language model. Using a domain adapted language model will help with the disambiguation of the acronyms and not dividing two-words into separate tokens. For example, the label of the symbol in FIG 4 will be processed from "Butterfly_Valve_70" to "ButterflyValve". Similarly, if the value of an extracted text is "AB" then it will be processed to "AxialBlower" since this is a common tag abbreviation in this domain. The processed text, together with the concept names from the DEXPI ontology are passed as input to the pre-trained NER model.

### c) Learning NER step 15

The NER model may be trained to the DEXPI concepts 16 in a learning step 15. Thereby the NER model can be adapted to the relevant domain. The NER model may use LLM.

### d) Mapping extracted data to DEXPI concepts 16 (applying NER model) in mapping step 17

The processed text, together with the concept names from the DEXPI ontology may be passed as input to the pre-trained domain adapted NER model. This model can identify the correct entity type for a given token. One such model is BERT - the transformer-based language model. The training data for the model is generated using manually labeled examples from previous P&IDs. The output of the model may be:

```
 "ButterflyValve" -> DEXPI: ButterflyValve
 "Point1" -> DEXPI: Point
 "Point2" -> DEXPI: Point
 "66KL21" -> DEXPI: PipingComponentNameAssignmentClass
```

The DEXPI data model consists of several packages, each related to the specific information elements for digital representation of P&ID elements. In the aspects relevant here, the packages "Piping Network System" and "Plant Structure Item" are of particular importance. The "Piping Network System" package covers all relevant information for the representation of the piping in the P&ID diagram. It includes taxonomy of the different piping components (classes and sub classes of valves) as well as the different types of piping for e.g., Piping network segment, piping connection, etc.

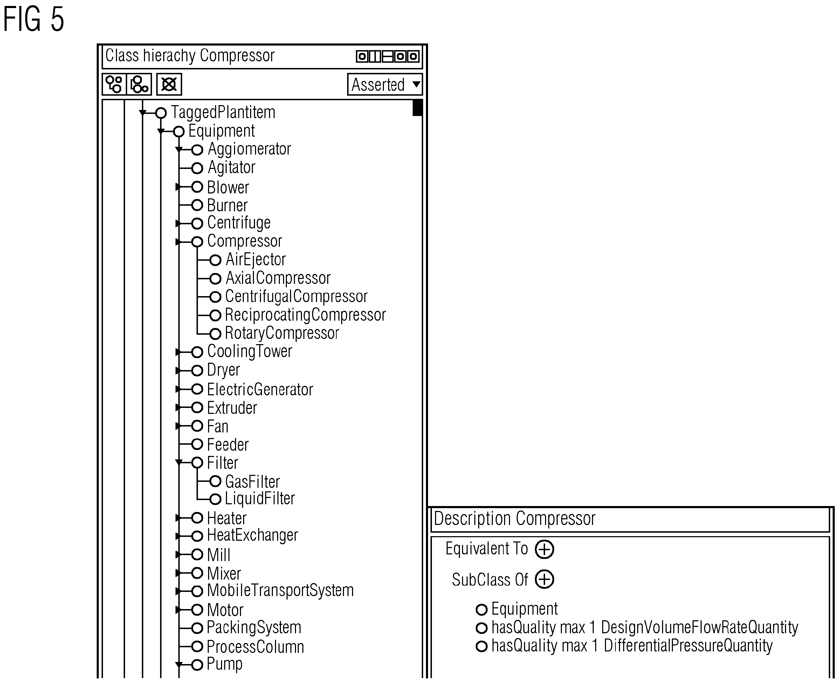

FIG 5 shows the DEXPI concepts which are used for describing the tagged plant items in a P&ID. These are all subclasses of the "Plant Structure Item" package. The "Plant Structure Item" package includes the concepts relevant for representing equipment and their associated properties.

The NER model is fine-tuned to classify the input into one of the classes from the two mentioned packages (E.g.: class "Compressor", subclass "CentrifugalCompressor"). After classifying the extracted information as a DEXPI concept, the final step is to generate instances.

### e) Generating instance data in generating step 18

For every classified input, a new instance is generated with a unique URI (uniform resource identifier) by adding the identifier to the entity type name. The generation of instance data takes as input the predicted entity type and the id associated from the object/text extraction service and generates the unique URI.

For example: the instance of the symbol "Butterfly_Valve_70" will have a unique URI with a predefined namespace and surface name: "ButterflyValve-70" and it will be an instance of the DEXPI class "ButterflyValve".

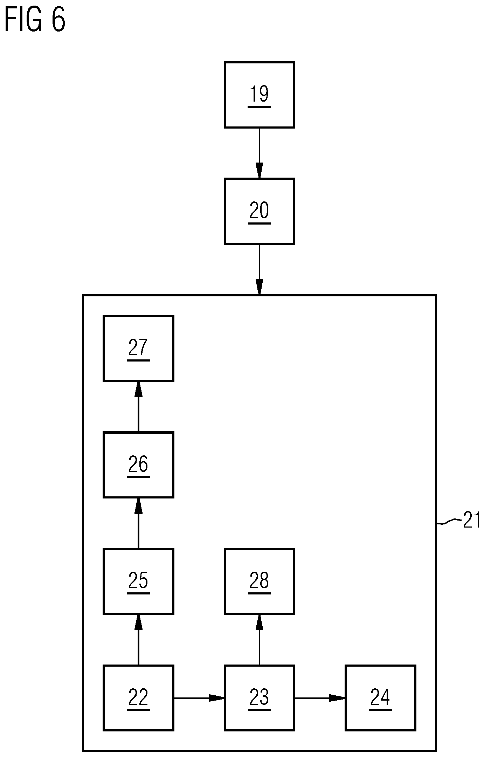

FIG 6 shows how a correctly mapped instance data related to the P&ID element 12 of FIG 4 would look like by using the two mentioned DEXPI packages.

A processing result 19 of processing step 13 can include an identified object and an identified text. For example, the identified object is Butterfly_Valve_70 and the identified text is "66KL21-80". The NER model transforms the processing result 19 to recognize type entities 20. In the present example, the identified object Butterfly_Valve_70 will be transformed to the DEXPI entity ButterflyValve. Furthermore, the identified text "66KL21-80" will be transformed to the PipingComponentName.

The recognized type entities 20 can be inserted into a knowledge graph 21. The knowledge graph 21 originates in the PID (short form of "P&ID") raw information 22 which is "ButterflyValve-66KL21". A PID quality 23 is extracted from the PID raw information 22. In the present example, the PID quality 23 is ButterflyValveName. The PID entity has a certain PID value 24. In the present case, the PID value is "66KL21".

The PID raw information 22 is assigned to a respective DEXPI class 25. In the present case, the DEXPI class 25 is ButterflyValve. The higher-level DEXPI class 26 is OperatedValve. The even higher-level DEXPI class 27 is PipingComponent. The PID quality 23 is transformed to the DEXPI class 28 called PipingComponentName.

The presented method can also involve a domain expert in the loop for providing correct labels for the pre-trained NER model, thus improving future predictions. Preferably the domain expert validates the classifying result of the NER model by respective interaction. With the review and correction of the domain expert, a retraining step for the model can be triggered with the added labels and with this the performance of the NER model can be improved.

Special features of the described embodiments are the following:
1. Image and Text processing Pipeline with trainable NER model for automated entity recognition.
2. End-to-end procedure for generation of instance data for DEXPI model from P&ID drawings.

The benefits of embodiments of the inventive method or device are the following:
1. Enabling faster creation of semantic digital twins of process plants via P&IDs using automated mapping and knowledge graph generation.
2. Reducing manual effort from domain experts which is often time-consuming and could be error-prone.
3. Grounding to a well-known standard promotes consistency and reusability of the digital twin of a process plant, thereby increasing interoperability across systems.
4. Enrichment of the extracted equipment characteristics by looking at the associated qualities in the DEXPI ontology.
5. Moreover, after mapping to the DEXPI ontology the generation of a KG representation for the P&ID will help with building analytical applications like:
   a. Predictive maintenance of the process plant
   b. Detection of design patterns using subgraph mining
   c. Root-cause analysis when faults occur
   d. Consistency and reusability of the digital twin of the P&ID

### Reference signs

- 1 to 10: symbols
- 11: bounding box
- 12: P&ID element
- 13: processing step
- 14: post-processing step
- 15: learning step
- 16: DEXPI concept
- 17: mapping step
- 18: generating step
- 19: processing result
- 20: recognized type entities
- 21: knowledge graph
- 22: PID raw information
- 23: PID quality
- 24: PID value
- 25: DEXPI class
- 26: higher-level DEXPI class
- 27: even higher-level DEXPI class
- 28: DEXPI class

## Claims

1. Method of mapping (17) drawing information representing a design of a process plant to an industrial standard, **characterized by** the steps of:
- automatically extracting (13) the drawing information (19, 22) from a drawing representing the process plant,
- automatically mapping the drawing information to classes (25, 28) of the industrial standard by using a named entity recognition model,
- generating an instance of the class of the industrial standard the drawing information is mapped to.

2. Method according to claim 1, wherein the drawing is a piping and instrumentation diagram (12).

3. Method according to claim 1 or 2, wherein the industrial standard is the Data Exchange in Process Industry standard.

4. Method according to one of the preceding claims, wherein the step of automatically extracting the drawing information includes symbol detection and/or line detection and/or text extraction.

5. Method according to one of the preceding claims, wherein the named entity recognition model is pre-trained with concepts of the industrial standard.

6. Method according to one of the preceding claims, wherein the named entity recognition model uses a large language model for text extraction.

7. Method according to one of the preceding claims, wherein a knowledge graph (21) including the generated instance of the class is provided.

8. Method according to claim 7, wherein a digital twin of the process plant is provided on the basis of the knowledge graph (21) .

9. Method according to one of the preceding claims, wherein after the step of automatically extracting the drawing information, the extracted drawing information is subjected to text cleaning, tokenizing, word embedding and/or positional embedding.

10. Method of controlling a process plant by providing a digital twin according to claim 8, wherein the process plant is controlled by running the digital twin at least partly in parallel to the process plant.

11. Device for mapping drawing information representing a design of a process plant to an industrial standard, **characterized by**:
- extraction means designed for automatically extracting the drawing information from a drawing representing the process plant,
- mapping means designed for mapping the drawing information to classes of the industrial standard by using a named entity recognition model and
- generating means designed for generating an instance of the class of the industrial standard the drawing information is mapped to.

12. System including a process plant and a device according to claim 11, wherein controlling means of the process plant is designed for controlling the process plant by running a digital twin based on the generated instance at least partly in parallel to the process plant.

13. Computer program including commands, which, when executed on a device according to claim 11, cause the device to carry out the method according to one of the claims 1 to 9.
